Europäisches Patentamt

European Patent Office

Office européen·des brevets

(19)

(11) Veröffentlichungsnummer: **0 053 806**
A2

(12) # EUROPÄISCHE PATENTANMELDUNG

(21) Anmeldenummer: 81110119.5

(22) Anmeldetag: 03.12.81

(51) Int. Cl.³: **B 23 Q 39/04**

(30) Priorität: 08.12.80 DE 3046172

(43) Veröffentlichungstag der Anmeldung:
16.06.82 Patentblatt 82/24

(84) Benannte Vertragsstaaten: ˙ ˙
AT BE CH DE FR GB IT LI NL SE

(71) Anmelder: SORTIMAT Creuz & Co. GmbH
Postfach 250
D-7057 Winnenden (Württ.)(DE)

(72) Erfinder: Amon, Werner
Leutenbacher Strasse 45
D-7057 Leutenbach(DE)

(74) Vertreter: Patentanwälte Dr. Elisabeth Jung Dr. Jürgen
Schirdewahn
Dr. Gerhard Schmitt-Nilson Dipl.-Ing. Peter Hirsch
Clemensstrasse 30 Postfach 40 14 68
D-8000 München 40(DE)

(54) Schalttellermaschine.

(57) Die Erfindung bezieht sich auf eine Schalttellermaschine,
bei der die Arbeitsköpfe ihrer über ihren Umfang verteilten
Arbeitsstationen von einer zentralen Welle der Schalttellermaschine gemeinsam auf und ab bewegbar sind und bei der
ferner die Arbeitsköpfe jeweils über eine eigene Steuerkurve
zwischen einer in bezug auf die Schalttellermaschine radial
inneren Wirkstellung und einer radial äußeren Neutralstellung hin und her bewegbar sind. Nach der Erfindung ist
vorgesehn, daß die Arbeitsköpfe (8) mehrerer Arbeitsstationen zwischen Wirkstellung und Netralstellung von einer
gemeinsamen, hin und her winkelbewegbaren Kurvenscheibe (84) durch über deren Umfang verteilte, dem jeweiligen
Arbeitskopf zugeordnete Kurvenstücke (an 86) verstellbar
sind.

FIG.5

EP 0 053 806 A2

" Schalttellermaschine "

Die Erfindung bezieht sich auf eine Schalttellermaschine.
Mit einer Schalttellermaschine kann man einerseits Werkstückteile montieren und andererseits an Werkstücken Bearbeitungen, z.B. spanabhebender, aber auch anderer Art, vornehmen.
Bei einer Schalttellermaschine wird ein Schaltteller durch
einen Grundschalttisch schrittweise im Takt winkelverstellt.
Dabei geraten nacheinander verschiedene Werkstückaufnahmen
des Schalttellers radial gegenüber Arbeitsstationen, die
mittels Arbeitsköpfen auf das Werkstück einwirken. Die Arbeitsköpfe führen dabei im Takt jeweils einerseits eine Auf-
und Abbewegung und andererseits eine Bewegung von einer in
bezug auf die Achse der Schalttellermaschine bzw. des Schalttisches radial inneren Wirkstellung und einer bezüglich derselben Achse radial äußeren Neutralstellung durch. Im Falle
einer Werkstückteilmontage wird dabei der Arbeitskopf über
dem Entnahmeort eines Werkstückteile in Reihe hintereinander
zuführenden Zuführförderers angeordnet.

- 2 -

Es ist schon bekannt, die Hubbewegung aller Arbeitsköpfe
der außerhalb der Schalttellermaschine angeordneten
Arbeitsstationen gemeinsam durch eine nicht-drehbare,
aber im Takt der Schalttellermaschine auf- und abbewegbare
erste zentrale Welle der Schalttellermaschine vorzunehmen und die radiale Hin- und Herbewegung der
Arbeitsköpfe der Schalttellermaschine durch eine
zweite nicht drehbare zentrale Welle der Schalttellermaschine über Kipphebel zu betätigen (US-
PS 4 027 767; DE-OS 2 931 058).

Der Erfindung liegt die Aufgabe zugrunde, den Antriebs- und Steueraufwand für die radiale Hin- und
Herbewegung der Arbeitsköpfe noch weiter zu reduzieren.

Diese Aufgabe wird bei einer gattungsgemäßen Schalttellermaschine gemäß dem Kennzeichen von Anspruch 1 gelöst.
Die Erfindung ermöglicht es, für den Antrieb und die Bewegungssteuerung der radialen Hin- und Herbewegung der
Arbeitsköpfe aller oder wenigstens
einer gewissen Anzahl der Arbeits-

stationen nur eine einzige Kurvenscheibe vorzusehen. Wegen des gegenüber den bekannten Antrieben gewonnenen Raumes kann man dabei den Radius dieser Kurvenscheibe so groß wählen, daß sogar die wirksame Länge des jedem Arbeitskopf zugeordneten Kurvenstücks größer sein kann als der Gesamtumfang einer üblichen umlaufenden, der jeweiligen Arbeitsstation gesondert zugeordneten Kurvenscheibe. Ferner kann man wegen des großen Radius einer solchen Kurvenscheibe die Länge der Antriebs- und Steuerungswege relativ kleiner halten. Es wird dabei nicht nur der bauliche Aufwand drastisch reduziert, sondern auch eine erhebliche Energieeinsparung durch Reduzierung von relativ zueinander bewegten Teilen erreicht. Auch brauchen nur noch geringere Massen im Antriebs- und Steuerungsweg bewegt zu werden, so daß allein schon durch diese Maßnahme die Taktzeiten verkürzt werden können. Die Störanfälligkeit wird reduziert und die Standfestigkeit erhöht. Ferner bestehen Herstellungsvereinfachungen bei der zentralen Kurvenscheibe, da man für jede Arbeitsstation ein nur in relativ geringem Maße gekrümmtes Kurvensegment in einem Segmentträger einzusetzen braucht und daher nicht eine ganze Kurvenscheibe mehr benötigt. Abgesehen von dieser wesentlichen Einsparungsmöglichkeit kann man auch für alle in Frage kommenden Schalttellermaschinengrößen, die meist nach der Zahl der Arbeitsstationen unterschieden werden, eine relativ geringe Zahl von Kurvenscheiben bausatzmäßig vorrätig halten.

Einen weiteren wesentlichen Einsparungs- und Bedienungsvorteil erhält man dann, wenn die Arbeitsstationen selbst nicht mehr um die Schalttellermaschine unabhängig gruppiert, sondern mit dieser verbunden werden. Besonders bevorzugt sind dabei die beiden Möglichkeiten der Ansprüche 2 und 3. Die Lösung gemäß Anspruch 2 ist konstruktiv etwas einfacher, erfordert jedoch beim Auf- und Abhub eine Mitbeschleunigung der Arbeitsstationen (etwas genauer der Teile der jeweiligen Arbeitsstation außer dem Arbeitskopf oder mehreren zugeordneten Arbeitsköpfe im folgenden der Einfachheit halber schlicht Arbeitsstation genannt). Bei sehr hohen Taktzahlen wird man daher die Lösung gemäß Anspruch 3 vorziehen. Die Massenkräfte von mit auf- und abbewegten Arbeitsstationen lassen sich auf bekannte Weise einfach kompensieren, z.B. durch ein Gegengewicht, eine auf eine bestimmte Neutrallage eingestellte Feder, hydraulische oder pneumatische Dämpfer o.dgl. (Anspruch 28).Wenn jedoch die Arbeitsstationen ortsfest mit der Schalttellermaschine verbunden sind, wird eine Verbindung vorzugsweise mit einem über dem Schaltteller angeordneten, im allgemeinen zentral liegenden, Teil bevorzugt, um die zur Achse der Schalttellermaschine parallel gemessenen Entfernungen zwischen Arbeitsstation und zugehörigem Arbeitskopf kleinzuhalten.

Sowohl im Falle des Anspruchs 2 als auch im Falle des Anspruchs 3 kann man sehr kurze Antriebs- und Steuerungswege erreichen und ferner außerhalb der Schalttellermaschine liegende Montagezuführ- und Steuerungsteile von Überdeckungen durch Bauelemente der Arbeitsstationen freihalten. Dabei kann man nur als ein Beispiel unter vielen den Raum über den Einlaufstücken von Förderschienen oder anderen Zuförderern für Werkstückteile freihalten und so bei einer Zulieferungsstörung ohne Behinderung durch Vorrichtungsteile schnell eingreifen. Dadurch kann man bei solchen Störungen die Betriebsunterbrechungen sehr kurzhalten. Auch die Wartung der empfindlichen Zufördereinrichtungen wird wesentlich erleichtert. Die der Schalttellermaschine nahe Anordnung von Arbeitsstationen braucht insbesondere dann nicht an anderer Stelle zu stören, wenn man den Hub der Arbeitsköpfe und gegebenenfalls der Arbeitsstationen hinreichend groß wählt. Außerdem ist in diesem Bereich Notwendigkeit für Eingriffe von Bedienungspersonen im allgemeinen weitaus geringer.

Anspruch 4 sieht ferner als sehr wesentliche Weiterbildung der Erfindung eine zusätzliche Nutzung der zentralen Welle der Schalttellermaschine nicht nur für die Hubbetätigung der Arbeitsköpfe und gegebenenfalls der Arbeitsstationen, sondern auch noch für die radiale Verstellbewegung der einzelnen Arbeitsköpfe vor. Hierzu wird die zentrale Welle zusätzlich zu ihrem im Takt erfolgenden Hub in Winkelrichtung pro Takt oszilliert. Die zentrale Welle kann dabei sehr günstig die Steuerwelle für die Hin- und Herbewegung der Arbeitsköpfe gerade in deren Höhe tragen und so weiter Übertragungsstrecken der Antriebs- und Steuerbewegung minimieren. Zum Beispiel kann man dann die Kurvenstücke dieser Kurvenscheibe einfach durch Linearglieder abtasten.

Anspruch 5 sieht vor, eine zentrale Antriebs- und Steuerwelle auch für die taktweise Winkeloszillation der zentralen Welle der Schalttellermaschine einzusetzen. Dies kann gemäß Anspruch in Verbindung mit der bei der gattungsgemäßen Schalttellermaschine bereits an sich bekannten Steuerung der Hubbewegung der zentralen Welle ebenfalls mittels einer einzigen "zweiten" Kurvenscheibe erfolgen, so daß man bei der erfindungsgemäßen Schalttellermaschine mit nur zwei Kurvenscheiben an der zentralen Antriebs- und Steuerwelle einerseits für die Hubsteuerung und andererseits für die Ausfahrsteuerung auskommen kann. Der gewonnene Raum kann nicht nur zur Einsparung, sondern auch zur größeren, aufwendigeren und damit im Endeffekt genaueren Auslegung der verbleibenden Antriebsteile ohne Zusatzaufwand genutzt werden. Die Möglichkeit der Benutzung von lagermäßig vorrätig gehaltenen Serienteilen, ja Normteilen, ist gegeben.

Die Ansprüche 7 und 8 beschreiben bevorzugte Antriebs- und Steuerungseinrichtungen für die Winkelbewegung der zentralen Welle und die Ansprüche 11 und 12 für die Hubbetätigung der zentralen Welle, jeweils abgeleitet von der zugehörigen Kurvenscheibe der Haupt-Antriebs- und Steuerwelle. Vorteilhaft wird dabei nur eine anliegende und im Notfall abhebende Verbindung der Antriebs- und Steuerelemente mit der zugehörigen Kurvenscheibe vorgesehen. Derartige Notfälle treten beispielsweise auf, wenn Werkstücke oder Werkstückteile nicht richtig positioniert oder nicht wunschgemäß bearbeitet worden sind, und es dadurch zu Blockaden des Bewegungsablaufes kommt.

Anspruch 9 und die konstruktiv vorteilhafte Weiterbildung gemäß Anspruch 1O stellen eine Winkelbetätigung der zentralen Welle unabhängig von deren momentaner Hubstellung durch unveränderte Antriebs- und Steuerungselemente sicher.

Die erfindungsgemäße Schalttellermaschine stellt es dem Benutzer in Sonderfällen frei, auf die oben geschilderte extreme Vereinfachung zu verzichten und gewisse Arbeitsstationen in konventioneller Weise anzuordnen und/oder anzutreiben.

Vorzugsweise ist die erfindungsgemäße Schalttellermaschine gemäß Anspruch 15 mit bereits erörterter Weiterbildung nach Anspruch 16 mindestens zum Teil als Montagemaschine eingesetzt. Aber auch bei Verwendung als reine Bearbeitungsmaschine zeigen sich erhebliche Vorteile der geschilderten Art.

Anspruch 17 mit Weiterbildung gemäß Anspruch 18 ermöglicht es, trotz der durch die zentrale Welle vorgegebenen - gegebenenfalls einstellbaren - gemeinsamen Hubverstellung der Arbeitsköpfe und gegebenenfalls der Arbeitsstationen die Arbeitshöhe der Arbeitsköpfe individuell an der Schalttellermaschine einstellen zu können. Anspruch 19 mit der Weiterbildung gemäß Anspruch 2O verhindert eine Betriebsunterbrechung dann, wenn ein Arbeitskopf während des Betriebes auf einem nicht richtig positionierten Element aufläuft, was sonst zu einer sofortigen Bewegungsblockierung der gesamten Maschine gegebenenfalls zu größeren Schäden führen könnte. Man kann dann den betreffenden Anlaß schnell durch Anheben eines einzigen Arbeitskopfes beheben. Gewisse Zentrierungsfehler der mit der Schalttellermaschine verbundenen Arbeitsköpfe kann man gemäß Anspruch 21, gegebenenfalls in individueller Einstellung gemäß Anspruch 22, ausgleichen.

Bisher ist es üblich, das Vorhandensein eines Werkstückes in einer bestimmten Werkstückaufnahme oder ein Bearbeitungs- oder Zusammenfügungsergebnis in einem gesonderten Takt an einer extra dafür vorgesehenen Überwachungsstation zu kontrollieren. Dabei kann man manchmal ebenso viele Überwachungsstationen

wie Arbeitsstationen benötigen und insoweit zu einer erheblichen Benutzungseinschränkung selbst von Schalttellermaschinen relativ großer Stationenzahl kommen. Diese Möglichkeit ist zwar bei der erfindungsgemäßen Schalttellermaschine auch gegeben. Sie hat jedoch darüber hinaus noch die Möglichkeit, die Zahl derartiger Überwachungsstationen zu reduzieren, eventuell gar drastisch, oder sie gar gänzlich einzusparen. Eine Möglichkeit hierzu sieht Anspruch 23 mit Weiterbildung gemäß Anspruch 24 vor. Vor dem Arbeitsgang kann man beispielsweise das Vorhandensein des betreffenden Werkstücks und/oder nach dem Arbeitsgang das Arbeitsergebnis prüfen, und zwar dann, wenn sich der Arbeitskopf in seiner Neutralstellung befindet und sich dabei in der Hubbewegungsphase seines Armes in Richtung auf die Werkstückaufnahme befindet. Wenn über der Werkstückaufnahme zwischen Arbeitskopf und Arbeitsstation der Taster vorgesehen ist, kann er die erwähnte Kontrolle durchführen. Wenn auch die Kontrolle beispielsweise rein optis elektrodynamisch oder elektrostatisch oder auf andere nicht me chanische Weise erfolgen kann, so kann man doch sehr bequem auch ein mechanisches Tastelement für die Ergebniskontrolle benutzen, welches dann zweckmäßigerweise mit einer Steuerelektronik für im Notfall erfolgende Abschaltungen u.dgl. verbunden ist. Ein besonderer Vorteil der Anordnung eines solchen Fühlers an dieser Stelle liegt daran, daß der Hebelarm in bezug auf die Arbeitsstation sehr kurz ist und dadurch besonders große Genauigkeit des Abtastergebnisses bei unterstellten Durchbiegungen des Hebelarmes möglich ist.

Die Ansprüche 25 bis 27 schließlich geben die Möglichkeit, beim Hub des Arbeitskopfes auf einen Entnahmeort an einem Einlaufstück einer Werkstückteilzuführung zu, meist also bei einem Abwärtshub, einerseits zugleich in sehr einfacher Weise mittels der Schalttellermaschine eine Nachlaufsperre für die zugeführten Werkstückteile zu schaffen und/oder zugleich eine nicht ordnungsgemäße Zuführung eines Werkstücks, z.B. ein nur halbes Nachrücken, zu tasten. Wenn der Taster starr mit dem Arbeitskopf verbunden ist, dieser jedoch nach oben oder allgemein fortgerichtet durchrutschen kann, kommt es dabei nicht zu unerwünschten Blockierungen. Ein für derartige Zwecke verwendetes Glied kann sogar in solchen Fällen, in welchen ein Werkstückteil nicht völlig korrekt, jedoch annähernd korrekt, zugeführt ist, den gewünschten Zustand durch Nachdrücken selbsttätig einstellen. Gegebenenfalls kann man dabei eine gewisse Elastizität des verwendeten Gliedes, an die Formgebung der Werkstückteile angepaßte Ausbildungen der freien Enden des Gliedes u.dgl. verwenden.

Die Erfindung wird im folgenden anhand schematischer Zeichnungen an mehreren bevorzugten Ausführungsbeispielen im einzelnen erläutert. Es zeigen:

Fig. 1   eine Halbansicht in Draufsicht einer Schaltteller-
         maschine;

Fig. 2a  ein Bewegungsdiagramm der Hub- und Ausfahrbewegungen
         von Arbeitsköpfen einer Arbeitsstation;

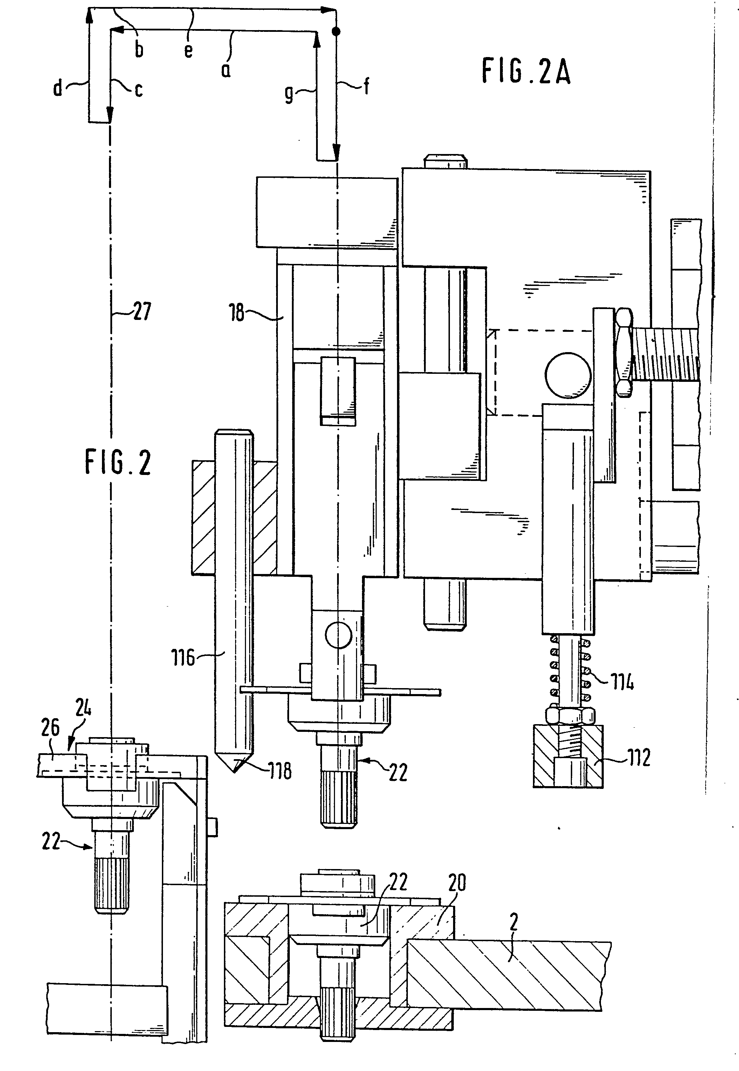

Fig. 2   eine teilweise geschnittene Seitenansicht einer Arbeitsstation mit Arbeitskopf und Tastkopf, eine ver-
         tikal geschnittene  Teilansicht des Schaltteller-
         bereiches und eine Ansicht des Einlaufbereiches einer
         Werkstückzuführung;

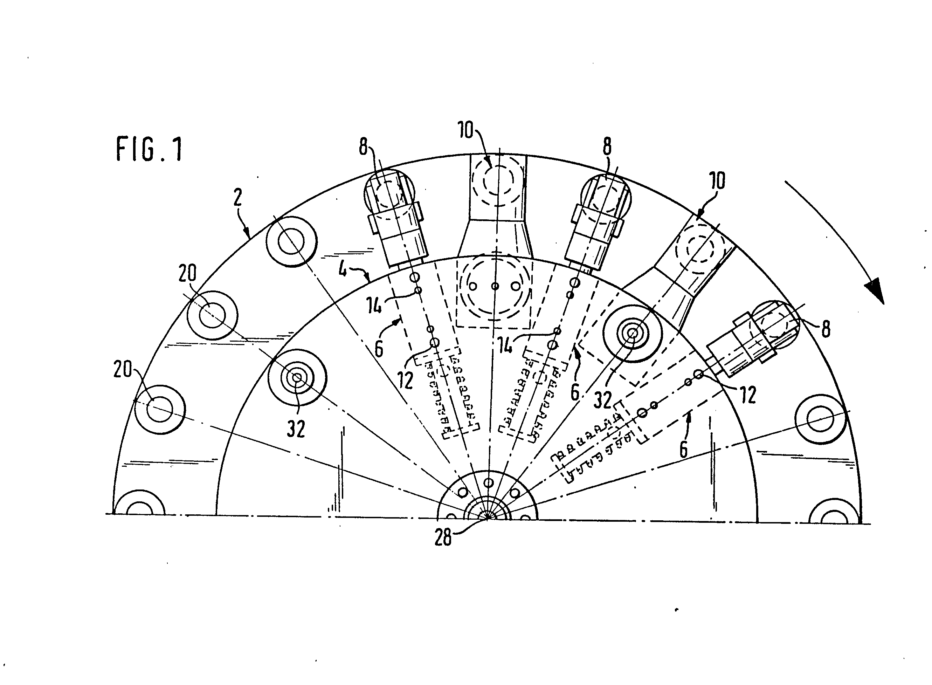

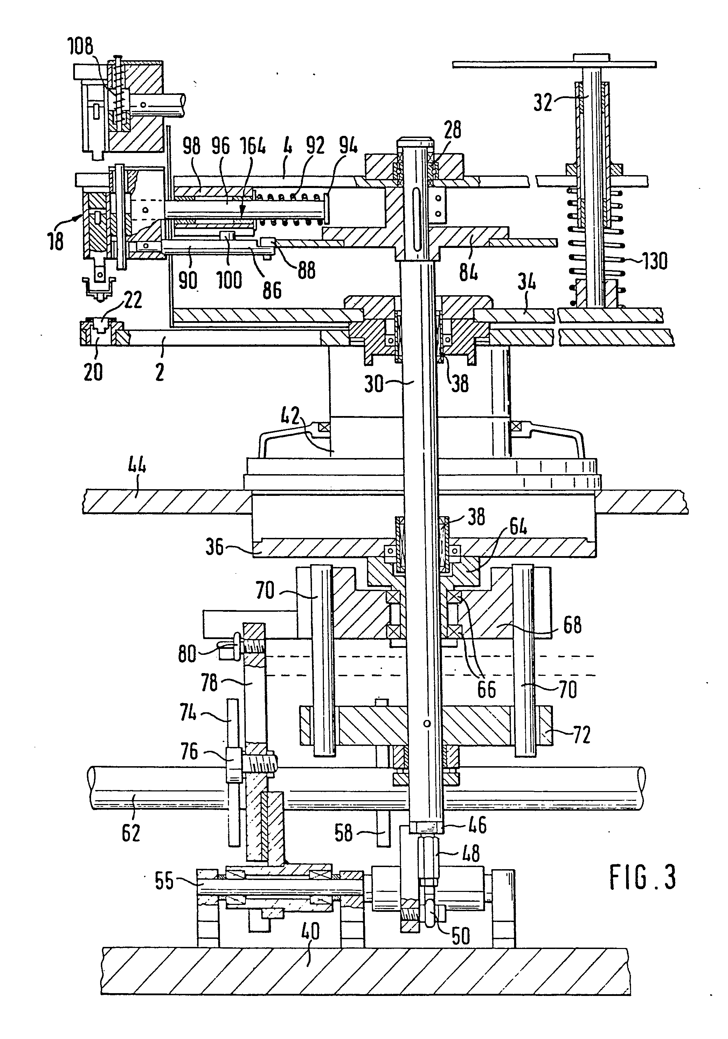

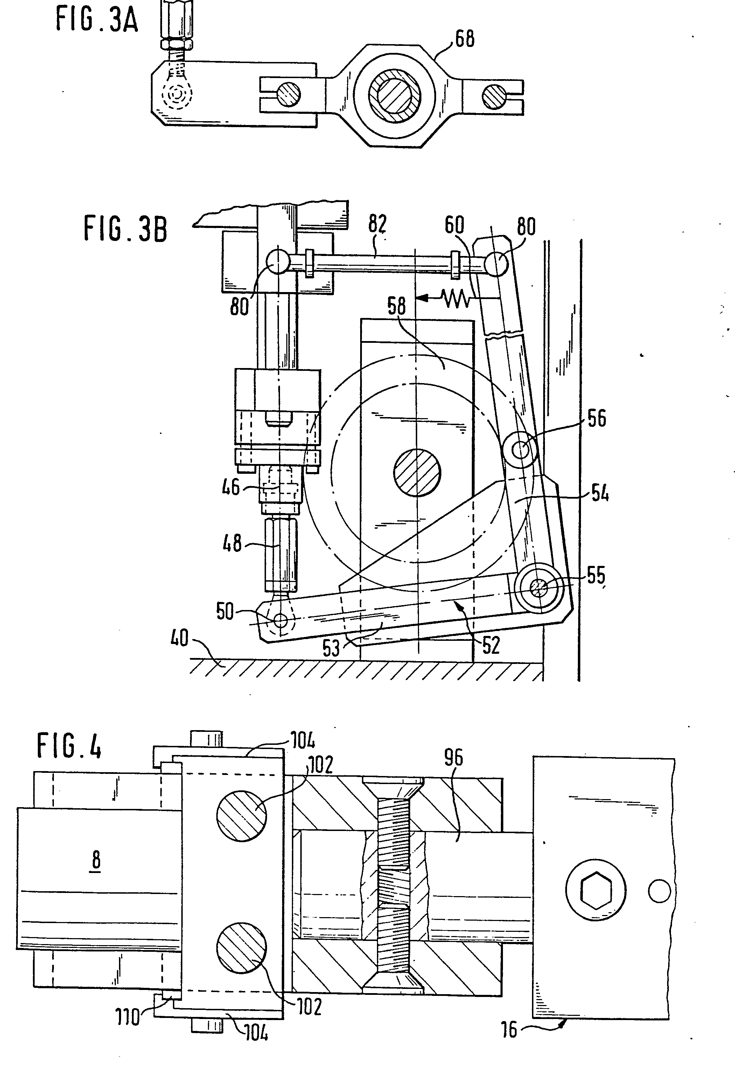

Fig. 3   einen in einer radialen Ebene verlaufenden vertikalen
         Querschnitt durch eine Schalttellermaschine gemäß bei-
         spielsweise Fig. 1;

Fig. 3a  eine Draufsicht auf ein Betätigungselement der zentralen Welle der Schalttellermaschine gemäß Fig. 3;

Fig. 3b  eine teilweise geschnittene Seitenansicht der Hubbetätigung der zentralen Welle der Schalttellermaschine
         gemäß Fig. 3;

Fig. 4   eine teilweise geschnittene Draufsicht auf einen Arbeitskopf und dessen Verbindung mit seiner Arbeitsstation;
         sowie

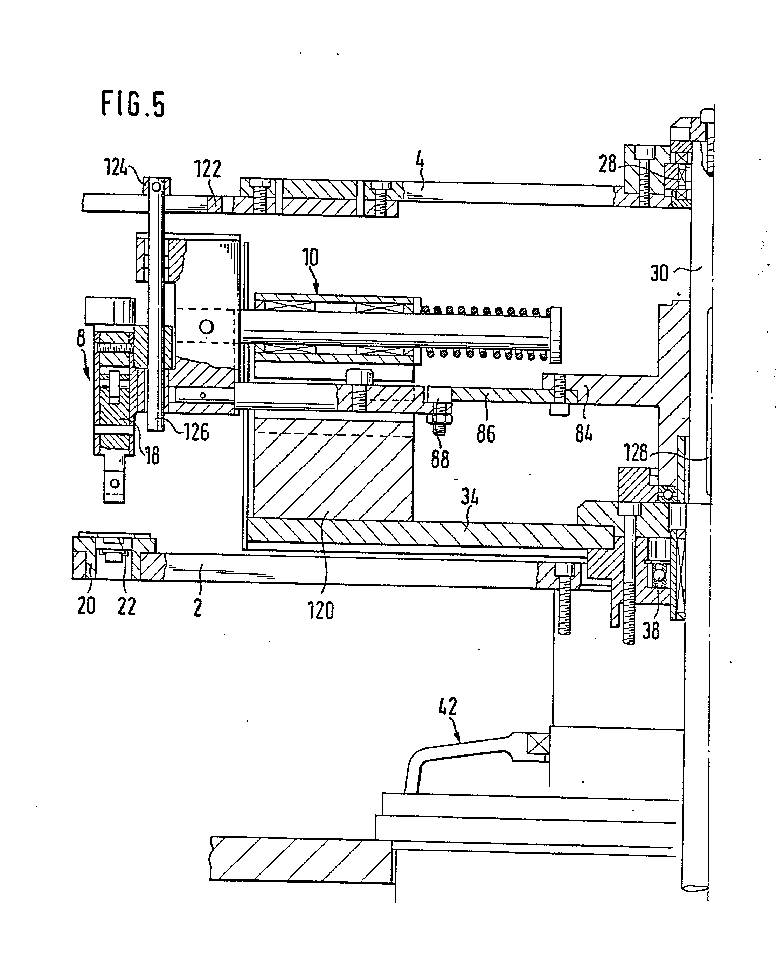

Fig. 5   einen in derselben Schnittebene wie in Fig. 3 wiedergegebenen Teilschnitt mit Seitenansicht des Rundschalttisches einer zu Fig. 3 alternativen Ausführungsform
einer Schalttellermaschine.

Gemäß Fig. 1 ist ein runder Schaltteller 2 der Schalttellermaschine, welcher sich gemäß dem eingezeichneten Pfeil im Uhrzeigersinn taktweise bewegt, von einem konzentrischen Hubteller 4 überragt.

Im Winkelabstand der Taktverstellung des Schalttellers 2 sind
über den Umfang der Schalttellermaschine einzelne Arbeitsstationen verteilt, bei der hier dargestellten Teilung zwanzig
Arbeitsstationen. Es können auch weniger oder mehr Arbeitsstationen sein. Es gibt Arbeitsstationen verschiedener Art.
Dargestellt sind einerseits Arbeitsstationen 6 mit Arbeitsköpfen 8, welche im Sinne der Erfindung ein Bewegungsdiagramm
gemäß Fig. 2a durchlaufen, sowie sonstige Arbeitsstationen 10,
die beispielsweise für Überwachungszwecke nur eine Auf- und
Abbewegung durchführen und im Zusammenhang mit der Erfindung
im folgenden nicht näher interessieren. Der Schalttisch gemäß der Erfindung ist jedenfalls auch mit andersartigen Arbeits
stationen, etwa der Art der sonstigen Arbeitsstationen 10,
verträglich. Diese können in nicht dargestellter Weise mit eigenem horizontal und/oder vertikal wirksamen Antrieb bekannter Art oder dem Antrieb g
mäß der Erfindung insoweit entsprechendem reinen Hubantrieb versehen sein.

Die Arbeitsstationen 6 sind unterhalb des kreisscheibenförmigen Hubtellers 4, beispielsweise durch Schrauben 12 und Paßstifte 14, befestigt, wobei ein Ein- und Ausbau ohne Abnehmen
des Hubtellers 4 nach Lösen der Schrauben 12 möglich ist. Die
Arbeitsstationen 6 tragen über radial verstellbare Linearführungen, welche in dem Bewegungsdiagramm gemäß Fig. 2a eine
Hin- und Herbewegung gemäß den Bewegungspfeilen a und b durchführen, die Arbeitsköpfe 8, in dem in Fig. 3 dargestellten
Beispiel eine Greifzange 18. Die Arbeitsköpfe sind in der in
Fig. 1 dargestellten Wirkstellung axial fluchtend mit Werkstückaufnahmen 20 am Schaltteller 2 ausgerichtet. Beispielsweise ist ein etwa pilzförmiges Werkstück 22 gezeigt.

Gemäß Fig. 2 kommt im Falle der beschriebenen Montagemaschine

das Werkstück 22 im Einlaufstück 24 eines Werkstückzuförderers, beispielsweise einer Zuführschiene 26, an, in welcher hier das pilzförmige Werkstück 22 gleitend hängt. Die betreffende Zuführstation ist radial außerhalb der Darstellung von Fig. 1 angeordnet. Gemäß Fig. 2a kann der Arbeitskopf 8 in radial ausgefahrener Stellung so weit ausgefahren werden, daß er mit dem am Entnahmeort des Einlaufstücks 24 angeordneten Werkstück 22 gemäß der gedachten, strichpunktiert gezeichneten Linie 27 fluchtet. An dieser Stelle erfolgt entsprechend der Linie 27 ein Abwärtshub des Arbeitskopfes 8 nach der Bewegungsphase c im Diagramm gemäß Fig. 2a, woraufhin ein Aufwärtshub d längs derselben Achse wieder folgt, nachdem beispielsweise die Zange 18 das Werkstück 22 ergriffen hat. Dieses wird dann längs der Bewegungsphase e radial einwärts in Fluchtung über der zugehörigen Werkstückaufnahme 20 gefahren, wo dann wiederum ein Abwärtshub f zum Ablegen des Werkstücks und ein anschließender Aufwärtshub g längs derselben Hubachse wieder folgt. Danach beginnt der Bewegungsablauf mit der Bewegungsphase a, die mit der Bewegungsphase e bis auf die Richtung übereinstimmt, im nächsten Takt von neuem.

Während die Bewegungsphasen a und e im Diagramm nach Fig. 2a durch Verstellung der Arbeitsköpfe längs der bereits genannten Linearführungen 16 erfolgen, werden die Hubbewegungen entsprechend den Bewegungsphasen c und d durch vertikale Auf- und Abbewegung des Hubtisches 4 bewirkt, welcher dabei bei den beschriebenen Ausführungsformen mit Ausnahme der der Fig. 5 nicht nur die Arbeitsköpfe 8, sondern auch die Arbeitsstationen 6 auf- und abwärts bewegt.

Bei dieser Anordnung hat der Hubteller 4 einen kleineren Radius als der Schaltteller 2.

Der Hubteller 4 ist über ein kombiniertes Axial- und Radiallager 28 mit dem oberen Ende einer zentralen Welle 30 der Schalttellermaschine verbunden. Dabei sind über den Umfang des Hubtellers 4 mehrere vertikale Rundführungen 32, im Beispiel vier Rundführungen 32, verteilt, die mit einem ortsfesten Zwischenteller 34 der Schalttellermaschine fest verbunden sind und sicherstellen, daß der Hubteller 4 von der zentralen Welle 30 zwar auf-und abwärts mitgenommen, jedoch nicht verdreht werden kann.

Die zentrale Welle 30 ist einerseits im bereits genannten oberen Zwischenteller 34 und in einem unteren ortsfesten Zwischenteller 36 der Schalttellermaschine in zwei übereinander liegenden Gleit- und Drehlagern 38 zugleich gegen Kippen gehalten und axial und in Winkelrichtung verstellbar geführt.

Die beiden Zwischenteller 34 und 36 sind durch nicht näher dargestellte Gehäuseteile der Schalttellermaschine mit deren Grundplatte 40 starr verbunden.

Der untere Zwischenteller 36 ist zugleich Boden eines Rundschalttisches 42, welcher vorzugsweise die im deutschen Patent 2 123 290 im einzelnen beschriebene Bauart hat und zum im Takt der Schalttellermaschine erfolgenden schrittweisen Verstellen des Schalttellers 2 dient. Der Rundschalttisch 42 ist dabei vonder zentralen Welle 30 rückwirkungsfrei axial durchdrungen. An seinem Umfang ist die horizontale Tischplatte 44 eines Maschinentisches der Schalttellermaschine befestigt, welcher die hier beschriebenen Teile teils oberhalb teils unterhalb der Tischplatte 44 aufweist. Der Schaltteller läuft dabei oberhalb des Rundschalttisches 42 unter dem ersten Zwischenteller 34 um.

Das untere Ende der zentralen Welle 30 ist auf einem Drucklager 46 von einem längenverstellbaren Zwischenstück 48 unterstützt, das über einen Gelenkkopf 50 mit dem freien Ende eines Winkelhebels 52 (Fig. 3b) verbunden ist, der an einem horizontalen ortsfesten Schwenkzapfen 55 an seiner Winkelstelle gelagert ist. Während der eine Arm 53 des Winkelhebels 52 den Gelenkkopf 50 trägt, ist am freien Ende des anderen Arms 54 des Winkelhebels 52 eine Kurvenrolle 56 drehbar gelagert, welche mit einer umlaufend rotierbaren Kurvenscheibe 58 rollend und nach außen frei abhebbar zusammenwirkt. Der Arm 54 des Winkel-

hebels 52 ist durch eine Zugfeder 60 an die Kurvenscheibe 58 angedrückt.

Die Kurvenscheibe kann für die Hubbewegungen einerseits in der Neutralstellung und andererseits in der Betriebsstellung des Arbeitskopfes 8 unterschiedliche Hubstrecken vorsehen, wie es durch die unterschiedliche Länge einerseits der Bewegungsphasen c und d und andererseits der Bewegungsphasen f und g im Diagramm nach Fig. 2a wiedergegeben ist.

Die Kurvenscheibe 58 ist an einer horizontal zwischen der Grundplatte 40 und dem Rundschalttisch 42 drehbar gelagerten Hauptantriebs- und Steuerwelle 62 befestigt, die exzentrisch in der Schalttellermaschine angeordnet und von einem nicht gezeigten Maschinenantrieb in Umdrehungen versetzbar ist. Jede Umdrehung der Welle 62 entspricht einem Arbeitstakt der Schalttellermaschine. Die Welle 62 rotiert beim Betrieb der Schalttellermaschine kontinuierlich.

Unter dem unteren Zwischenteller 36 ist an diesem ein Lagerflansch 64 befestigt, durch den die zentrale Welle 30 rückwirkungsfrei hindurchgreift und der an seiner Außenseite zwei axial versetzte Drehlager 66 trägt, auf denen ein armförmiges Winkelverstellteil 68 drehbar, aber axial ortsfest, gelagert ist. Das Winkelverstellteil 68 trägt an seinen beiden diametral entgegengesetzten freien Enden je eine Rundführung 70, die ihrerseits mit ihrem freien Ende jeweils axial gleitbar mit einem Arm eines an der zentralen Welle 30 befestigten doppelarmförmigen Teils 72 zusammenwirkt. Auch der Winkelverstellteil 68 ist zur Aufnahme der Rundführungen 70 doppelarmförmig.

Die Antriebs- und Steuerwelle 62 trägt eine mit ihr starr verbundene weitere umlaufende Kurvenscheibe 74. Auf dieser läuft eine nach außen abhebbare Kurvenrolle 76, die am freien Ende eines geraden Schwenkhebels 78 drehbar gelagert ist, der seinerseits axial versetzt zum Winkelhebel 52,ebenfalls am Schwenkzapfen 55, der hier eine relativ lange Achslänge hat, an einer ortsfesten Stelle drehbar gelagert ist. Das freie Ende des Schwenkhebels 78 ist über einen Gelenkkopf 80 mit einer nach außen ragenden Fortsetzung des Winkelverstellteils 68 verbunden. Bei Drehung der Kurvenscheibe 76 oszilliert der Schwenkhebel 78 und versetzt über den Winkelverstellteil 68 die zentrale Welle 30 in Drehschwingungen. Zur Verbindung des Gelenkkopfes 80 am Schwenkhebel 78 mit einem weiteren Gelenkkopf 80 am Winkelverstellteil 68 dient eine längenverstellbare Schubstange 82. Der Schwenkhebel 78 ist durch eine der Zugfeder 60 entsprechende Feder gegen seine zugehörige Kurvenscheibe 58 vorgespannt.

Die hierdurch pro Schalttakt bewirkte Hin- und Herdrehung der zentralen Welle 30 wird in einer in Höhe der Arbeitsstationen 6 angeordneten horizontalen Kurvenscheibe 84 übertragen, die an der zentralen Welle 30 starr befestigt ist. Die Kurvenscheibe 84 weist über ihren Umfang verteilte, den verschiedenen Arbeitsstationen 6 zugeordnete Kurvenstücke auf, die jeweils an einem eigenen, in der Kurvenscheibe 84 eingelassenen Kurvensegment 86 außen angebracht sind. Die Kurve eines Kurvensegmentes wirkt über eine Kurvenrolle 88 jeweils mit einem linearen Betätigungsstößel 90 zur Betätigung der radialen Hin- und Herbewegung des Arbeitskopfes 8 der betreffenden Arbeitsstation 10 zusammen. Die Arbeitsköpfe 8 sind ihrerseits durch eine Druckfeder 92 radial nach innen vorgespannt, die am radial inneren Kopfstück 94 einer Führungswelle 96 jedes Arbeitskopfes 8 angreift. Die Führung der Führungswelle 96 weist zwei Führungsleisten 98 auf, zwischen die eine Führungsrolle 100 mit von null an einstellbarem Spiel greift und je nach der Einstellung mehr oder minder viel für eine axiale Verdrehung des Arbeitskopfes 8 beläßt.

Der Arbeitskopf 8 ist in seiner untersten Stellung durch einen Anschlag 106 festgelegt und ist nach oben gegen eine Druckfeder 108 nachgiebig verschiebbar. Ferner ist die Höhenstellung
des Arbeitskopfes 8 in einer vertikalen Gleitführung 110 stufenlos wählbar und mittels Klemmpratzen 104 festlegbar.

Zwischen Arbeitskopf 8 und Arbeitsstation 10 ist ein Tastkopf 112 von der Halterung des Arbeitskopfes 8 gegen eine
Federung 114 nachgiebig nach unten abstehend. In der ausgefahrenen Stellung der Arbeitsstation kann der Tastkopf 112
mit dem Bereich der Werkstückaufnahme 20 zusammenwirken.

Ferner ist ein Glied 116 mit beispielsweise konisch zulaufendem unterem Ende 118 starr radial weiter außen am Arbeitskopf 8 befestigt. Es kann dazu dienen, in einer Werkstückzuführung einerseits als Nachlaufsperre und andererseits als
Tastelement, gegebenenfalls auch Ausrichtelement, zu dienen.

Der Hubteller 4 ist mit einer nicht dargestellten Gewichtsentlastung, z. B. durch Gegengewicht oder Feder, verbunden.

Während bei der bisher beschriebenen Schalttellermaschine
die Arbeitsstationen 6 von der zentralen Welle 30 mit angehoben werden, sind sie bei der alternativen Ausführungsform gemäß Fig. 5 ortsfest durch einen Unterbau 120 mit dem ebenfalls ortsfesten oberen Zwischenteller 34 oberhalb von diesem
verbunden. Bei dieser Anordnung hat der Hubteller 4 einen sich
radial weiter nach außen erstreckenden leistenförmigen Fortsatz 122, welcher über eine Mitnehmerrolle 124 eine vertikale
Betätigungswelle 126 entsprechend der Rundführungswelle 102
betätigt. Auf diese Weise kann über die Betätigungswelle 126
die axiale Hubverstellung der Arbeitsköpfe 8 erfolgen. Die
radiale Verstellung der Arbeitsköpfe 8 kann wie bisher über
die horizontale Kurvenscheibe 84 erfolgen. Die Kurvenscheibe 84
ist bei dieser Ausführungsform ihrerseits nicht starr mit der
zentralen Welle 30 verbunden, sondern über eine axiale Gleitführung 128, hier als Keilführung dargestellt.

Sonst entspricht die Ausführungsform der Schalttellermaschine gemäß Fig. 5 der der Fig. 1 bis 4.

Bei der erstbeschriebenen Ausführungsform der Schalttellermaschine gemäß Fig. 1 bis 4 ist zur Gewichtsentlastung der zentralen Welle 30 und der mit ihr verbundenen Teile, insbesondere des Hubtellers 4 mit Aufbauten, wie den Arbeitsstationen 6, gegebenenfalls auch 10, zwischen dem Hubteller 4 und dem Zwischenteller 34 eine Druckfeder 130 zwischengeschaltet oder eine andere Gewichtsentlastung, z.B. durch Gegengewicht, vorgesehen. Dies ist bei der Ausführungsform nach Fig. 5 entbehrlich.

ELISABETH JUNG DR. PHIL. DIPL.-CHEM.
JÜRGEN SCHIRDEWAHN DR. RER. NAT., DIPL.-PHYS.
GERHARD SCHMITT-NILSON DR.-ING.
GERHARD B. HAGEN DR. PHIL.
PETER HIRSCH DIPL.-ING.

PATENTANWÄLTE
PROFESSIONAL REPRESENTATIVES BEFORE THE EUROPEAN PATENT OFFICE

8000 MÜNCHEN 40,
P. O. BOX 40 14 68
CLEMENSSTRASSE 30
TELEFON: (089) 34 50 67
TELEGRAMM/CABLE: INVENT MÜNCHE
TELEX: 5-29 686

—1—

SORTIMAT Creuz & Co. GmbH          -3. Dez. 1981
7057 Winnenden

## P a t e n t a n s p r ü c h e

1. Schalttellermaschine, bei der die Arbeitsköpfe ihrer über ihren Umfang verteilten Arbeitsstationen von einer zentralen Welle der Schalttellermaschine gemeinsam auf und ab und ferner jeweils über eine eigene Steuerkurve zwischen einer in bezug auf die Schalttellermaschine radial inneren Wirkstellung und einer radial äußeren Neutralstellung hin und her bewegbar sind,
dadurch g e k e n n z e i c h n e t , daß die Arbeitsköpfe (8) mehrerer Arbeitsstationen (6) zwischen Wirkstellung und Neutralstellung von einer gemeinsamen, hin und her winkelbewegbaren Kurvenscheibe (84) durch über deren Umfang verteilte, dem jeweiligen Arbeitskopf zugeordnete Kurvenstücke (an 86) verstellbar sind.

2. Schalttellermaschine nach Anspruch 1, dadurch gekennzeichnet, daß die Arbeitsköpfe (8) mitsamt ihrer jeweiligen Arbeitsstation (6) von der zentralen Welle (30) auf und ab bewegbar sind.

3. Schalttellermaschine nach Anspruch 1, dadurch gekennzeichnet, daß die Arbeitsstationen (6) ortsfest mit der Schalttellermaschine, vorzugsweise einem über dem Schaltteller (2) angeordneten Teil (34) derselben, verbunden (120) sind.

4.     Schalttellermaschine nach einem der Ansprüche 1 bis 3, dadurch gekennzeichnet, daß die gemeinsame Kurvenscheibe (84) an der ihrerseits hin und her winkelbewegbaren zentralen Welle (30) befestigt ist.

5.     Schalttellermaschine nach Anspruch 4 mit einer rotierbaren Antriebs- und Steuerwelle, gekennzeichnet durch eine mit der Antriebs- und Steuerwelle (62) umlaufende "erste" Kurvenscheibe (74) für den Antrieb und die Steuerung der Winkelbewegung der zentralen Welle (30)

6.     Schalttellermaschine nach Anspruch 5, gekennzeichnet durch eine mit der Antriebs- und Steuerwelle (62) umlaufende zusätzliche "zweite"Kurvenscheibe (58) für den Antrieb der Hubbewegung der zentralen Welle (30).

7.     Schalttellermaschine nach Anspruch 5 oder 6, dadurch gekennzeichnet, daß die erste Kurvenscheibe (74) einen ortsfest angelenkten Schwenkhebel (78) steuert, der gelenkig (80) mit einer Schubstange (82) verbunden ist, die ihrerseits gelenkig mit dem freien Ende eines von der zentralen Welle (30) abstehenden, vorzugsweise armförmigen, Winkelverstellteils (68) verbunden ist.

8.     Schalttellermaschine nach Anspruch 7, dadurch gekennzeichnet, daß die Länge der Schubstange (82) verstellbar ist.

9.     Schalttellermaschine nach einem der Ansprüche 1 bis 8, dadurch gekennzeichnet, daß die zentrale Welle (30) relativ zu einem Winkelverstellteil (68) konstanter Höhe axial verschiebbar ist, mit dem sie aber drehfest verbunden ist.

10. Schalttellermaschine nach Anspruch 9, dadurch gekennzeichnet, daß das Winkelverstellteil (68) in einem ortsfesten Lager (66) drehbar gehalten ist und über eine, vorzugsweise mehrfach über den Umfang der zentralen Welle verteilte, Gleitführung (70) mit einem an der zentralen Welle befestigten Teil (72) verbunden ist.

11. Schalttellermaschine nach einem der Ansprüche 6 bis 10, dadurch gekennzeichnet, daß die zweite Kurvenscheibe (58) einen Arm eines ortsfest angelenkten Winkelhebels (52) steuert, dessen anderer Arm gelenkig mit dem unteren Ende (bei 46) der zentralen Welle (30) verbunden ist.

12. Schalttellermaschine nach einem der Ansprüche 1 bis 11, gekennzeichnet durch eine Höhenverstelleinrichtung (48) der zentralen Welle (30).

13. Schalttellermaschine nach Anspruch 11 und 12, gekennzeichnet durch ein die Länge der Wirkverbindung zwischen Winkelhebel (52) und zentraler Welle (30) einstellendes verstellbares Zwischenstück (48).

14. Schalttellermaschine nach einem der Ansprüche 1 bis 13, dadurch gekennzeichnet, daß wenigstens eine Arbeitsstation ortsfest neben dem Schaltteller angeordnet und mit eigenem Antrieb, gegebenenfalls über eine umlaufende Kurvenscheibe einer Antriebs- und Steuerwelle, versehen ist.

15.     Schalttellermaschine nach einem der Ansprüche 1 bis 14,
dadurch gekennzeichnet, daß wenigstens eine Arbeitsstation,
vorzugsweise mehrere, eine Einlegestation (6) ist bzw. sind.

16.     Schalttellermaschine nach Anspruch 15, dadurch gekennzeichnet, daß die Einlegestation (6) den Raum über dem Einlaufstück (24) eines Zuführförderers (26) frei beläßt.

17.     Schalttellermaschine nach einem der Ansprüche 1 bis 16,
dadurch gekennzeichnet, daß der Arbeitskopf (8) an der Arbeitsstation (6) in der Höhe, vorzugsweise stufenlos, verstellbar
ist.

18.     Schalttellermaschine nach Anspruch 17, gekennzeichnet
durch eine mittels einer Klemmeinrichtung (104) feststellbare
Gleitverbindung zwischen Arbeitskopf (8) und Arbeitsstation (6)

19.     Schalttellermaschine nach einem der Ansprüche 1 bis 18,
dadurch gekennzeichnet, daß der Arbeitskopf (8) von der Werkstückaufnahme (20) weg nachgiebig von der Arbeitsstation (6)
gehalten (in 110) ist.

20.     Schalttellermaschine nach Anspruch 19, dadurch gekennzeichnet, daß der Arbeitskopf (8) relativ zur Arbeitsstation (6
auf die Werkstückaufnahme zu vorgespannt (108) ist.

21.     Schalttellermaschine nach einem der Ansprüche 1 bis 20,
dadurch gekennzeichnet, daß der Arbeitskopf (8) um seine Achse
(96) etwas Spiel hat.

22.     Schalttellermaschine nach Anspruch 21, gekennzeichnet
durch eine Einstelleinrichtung (98,100) für das Spiel, vorzugsweise vom spielfreien Grenzfall an.

23. Schalttellermaschine nach einem der Ansprüche 1 bis 22, gekennzeichnet durch einen zwischen Arbeitskopf (8) und Arbeit station (6) angeordneten, mit derselben Werkstückaufnahme (20) wie der Arbeitskopf im gleichen Arbeitstakt, aber zeitlich vor und/oder nachversetzt, zusammenwirkenden Fühler (112,114) für die Anwesenheit und/oder das Arbeitsergebnis eines Werkstücks.

24. Schalttellermaschine nach Anspruch 23, dadurch gekennzeichnet, daß der Fühler ein mechanisches Tastelement (112) au weist.

25. Schalttellermaschine nach einem der Ansprüche 1 bis 24, gekennzeichnet durch ein radial weiter außen als der Arbeits kopf (8) angeordnetes, von diesem getragenes und an einem Ort, der normalerweise zwischen einem am Abnahmeort eines Einlaufstückes (24) des Zuführförderers (26) bereitstehenden Werkstückteil (22) und einem nachfolgenden Werkstück oder Werkstüc: teil liegt, absenkbares Glied (116).

26. Schalttellermaschine nach Anspruch 25, dadurch gekennzeichnet, daß das Glied (116) zugleich Nachlaufsperre und Fühl· der Zuführlage des bereitstehenden Werkstücks oder Werkstückteils (22) ist.

27. Schalttellermaschine nach Anspruch 25 oder 26 in Verbin· dung mit Anspruch 16 oder 17, dadurch gekennzeichnet, daß das Glied (116) starr mit dem Arbeitskopf (8) verbunden ist.

28. Schalttellermaschine nach einem der Ansprüche 1 bis 27, gekennzeichnet durch eine Gewichtsentlastung der zentralen Welle (30) und der von dieser getragenen Teile (an 4) der Scha: tellermaschine.

FIG.1

1/5

005380(

0053806

FIG.2A

b   e   a       f

d       c   g

27

18

FIG.2

116

114

112

26   24

22

118   22

22   20   2

0053806

FIG.3

0053806

FIG.3A

68

FIG.3B

82    60    80

80

58

46

48

50

40    53    52

56

54

55

FIG.4    104

102    96

8

110    102    104

16

FIG.5